# EUROPEAN PATENT APPLICATION

(11) **EP 3 483 713 A1**
(43) Date of publication of application: **15.05.2019**
(21) Application number: 17306543.4
(22) Date of filing: 08.11.2017
(51) Int. Cl.: G06F 3/0487, G06F 3/01

(54) **SYSTEM AND METHOD FOR MODULATION OF CONTROL INTERFACE FEEDBACK**

(71) Applicant: Ecole Nationale de l'Aviation Civile, 31400 Toulouse Cedex (FR); Astrolab, 38000 Grenoble (FR)
(72) Inventor: PAUCHET, Sylvain, 31300 TOULOUSE (FR); VINOT, Jean-Luc, 11400 CASTELNAUDARY (FR); LETONDAL, Catherine, 31400 TOULOUSE (FR)
(74) Representative: Bell, Mark

(57) **Abstract**

A user interface behaves differently depending on whether a user is looking at it or not. The user interface may rely on visual audio or other primary feedback to the user when they are looking at it, and a tactile feedback when the user's gaze is elsewhere. This tactile feedback may be provided by haptic means, or by extensible/retractable hardware interface features such as knobs, buttons, switches or sliders.

## Description

### Field of the invention

The present invention relates to user interfaces, and in particular user interfaces with manual input.

### Background of the invention

The information technology revolution that has taken place over the last fifty years or so has meant that many human activities now involve, and often revolve around the manipulation of information technology systems, and in particular computers. The nature of the interfaces supporting these interactions has evolved continually in parallel with the processing and telecommunications capacities of these systems, from punch cards, keyboards, mouse driven graphical user interfaces and most recently multi-touch touch screen interfaces, the richness and accessibility of information displayed to a user has increased, and the precision and facility of interactions improved. Nevertheless, such operations have systematically remained based on manual interaction with the devices in question.

Recent advances in display technologies have made touch screen technologies increasingly common. Primarily used in standalone devices such as smart phones and tablet computers, the inherent flexibility of these devices means that they are increasingly used in other contexts in which user input may be required. Specifically, the use of a touchscreen or other touch sensitive device conveniently un-couples the relationship between the layout of the device and the interface configuration required in any particular context- in a given context, regions of the display may be assigned to display data and receive inputs as required. This may involve presenting graphical representations of traditional input devices such as knobs, switches or buttons, and interpreting user gestures in accordance with these idioms. This may also involve interpreting user gestures to simulate the movement of a pointer and click actions associated with mouse input, and still further may use swipes and other gestures that have evolved more specifically for use with such interfaces. As the context evolves, the layout and content of the interface may evolve correspondingly.

A drawback of such interfaces is that the user often receives little guidance to locate particular interface features, and to ascertain the effect of his gestures. It is desired to support the user in interactions with such devices.

### Summary of the invention

In accordance with the present invention in a first aspect there is provided an input interface processor controlling a user input array to be operated by a user, the processor receiving gaze direction data for the user, and when the gaze direction data indicates a coincidence of the gaze of the user with a specified region in space corresponding to a region presenting primary feedback as to the input array, controlling the user input array to enable interaction in a first mode, and when the gaze direction data does not indicate a coincidence of the gaze of the user with the specified region in space, controlling the user input array to enable interaction in a second mode, and wherein the user input array is associated with a feedback interface generating the primary feedback as to the input array, and wherein when input is enabled in the first mode, primary feedback is provided under control of the processor via the feedback interface.

In a development of the first aspect, the feedback interface comprises at least a portion of the input array.

In a development of the first aspect, the feedback interface comprises a visual feedback interface and the primary feedback is a visual feedback.

In a development of the first aspect, the feedback interface comprises an audio feedback and the primary feedback is an audio feedback.

In a development of the first aspect the user input array is associated with a contact feedback interface, and wherein when input is enabled in the second mode, user feedback is provided under control of the processor via the contact feedback interface.

In a development of the first aspect the contact feedback interface is a component of the input array.

In a development of the first aspect the contact feedback interface comprises a haptic transducer.

In a development of the first aspect the contact feedback interface comprises a button, knob, slider, joystick or switch.

In a development of the first aspect the button, knob, slider, joystick or switch is mounted retractably with respect to the input array under the effect of a motor, and wherein the motor is operated under the control of the processor so as to retract the button, knob, slider, joystick or switch in the second mode, and to extend the button, knob, slider, joystick or switch in the first mode.

In accordance with the present invention in a second aspect there is provided an input interface array comprising a contact input interface according to the first aspect and a feedback interface according to the first aspect adapted to communicate with a processor in according to the first aspect.

In accordance with the present invention in a third aspect there is provided an input interface system comprising a gaze tracker providing user gaze direction data, a processor according to any preceding claim, and a input interface array in accordance with the first aspect.

In accordance with the present invention in a fourth aspect there is provided a method of controlling a user input array to be operated by a user, the method comprising the steps of receiving gaze direction data for the user, and when the gaze direction data indicates a coincidence of the gaze of the user with a specified region in space associated with a feedback interface, controlling the user input array to enable input in a first mode and providing user feedback via the feedback interface, and when the gaze direction data does not indicate a coincidence of the gaze of the user with the specified region in space, controlling the user input array to enable input in a second mode.

In a development of the fourth aspect the user input array is associated with a contact feedback interface, and wherein when input is enabled in the second mode of the user input device user feedback is provided under control of the processor via the contact feedback interface.

In a development of the first aspect the method comprises the further step of controlling a motor so as to retract a button, knob, slider, joystick or switch in the second mode, and to extend the button, knob, slider, joystick or switch in the first mode.

In accordance with the present invention in a fourth aspect there is provided a computer program comprising instructions implementing the steps of the fourth aspect.

### Brief Description of the Drawings

The above and other advantages of the present invention will now be described with reference to the accompanying drawings, in which:
Figure 1 shows a system for modulation of control interface feedback in accordance with an embodiment;
Figure 2 presents an example of an interface array in accordance with an embodiment;
Figure 3 shows a further embodiment in a first state;
Figure 4 shows the embodiment of figure 3 in a second state;
Figure 5 shows an input interface array in accordance with an embodiment;
Figure 6 shows an input interface system in accordance with an embodiment;
Figure 7a shows a hybrid input array in accordance with an embodiment;
Figure 7b shows a hybrid input array in accordance with a further embodiment;
Figure 8a shows a method of controlling a user input array in accordance with an embodiment;
Figure 8b shows a development of the method of controlling a user input array of figure 8a;
Figure 9 shows a generic computing system suitable for implementation of embodiments of the invention;
Figure 10 shows a vehicle adaptable to constitute an embodiment; and
Figure 11 shows a flight controls adaptable to constitute an embodiment.

### Detailed description

As discussed above, touch surfaces are today a common means to interact with computers, and numerous critical domains including aeronautics are more interested in this technology for operational use. However, touch based interfaces require physical and bodily conditions that may not be met in some contexts. Human physiology dictates that an individual's eyes be directed at whatever is the object of their attention. In principle, this provides an intuitive and transparent mechanism for interfacing with computers. In practice however, such interfaces have proved difficult to implement, requiring expensive optical hardware, and imposing significant restraints on the freedom of movement of the user in order to maintain satisfactory performance. Nevertheless, advances in technology are increasingly making gaze tracking approaches feasible, particularly in situations where a user must monitor a large number of moving elements in the interface, over a long period, and where the implications of a misinterpretation or failed manipulation of the interface in real time are sufficiently serious to justify the cost of such systems. Examples of such installations include air traffic control displays, head up displays in vehicles, and so on.

Particular considerations arise when a user's attention is divided, so that the availability of the user's vision as a channel for user interface feedback is limited or discontinuous.

Users have to visually associate fingers to elements displayed on the surface in order to perform correct interactions. They also need sensory-motor control to maintain these associations across the interaction, which may be challenging in unstable physical conditions. This results in touch surfaces strongly soliciting the user's visual and cognitive attention, making it extremely difficult to perform other tasks simultaneously. However, in addition to these issues, the use of touchscreens can have drawbacks that might further limit their operational use in specific fields. For instance, when used in a vehicle a pilots' activity involves a significant level of multi-tasking, thus calling for tools that support for multimodal intertwined interactions and enable the operator's gaze to be freed for additional tasks such as the monitoring of other instruments. Secondly, interacting with a touchscreen is nearly impossible in vehicles or other platforms when vibrations due to irregular road surfaces, strong turbulent conditions or the like occur.

Embodiments of the present invention present mixed interactive approaches based on both touchscreens and contact components. Such approaches can help ensure a greater consideration of sensory motor skills, enable more effective collaboration between pilots, better support distributed visual attention, and thereby to overcome the potential risks of touch interactions in safety-critical systems.

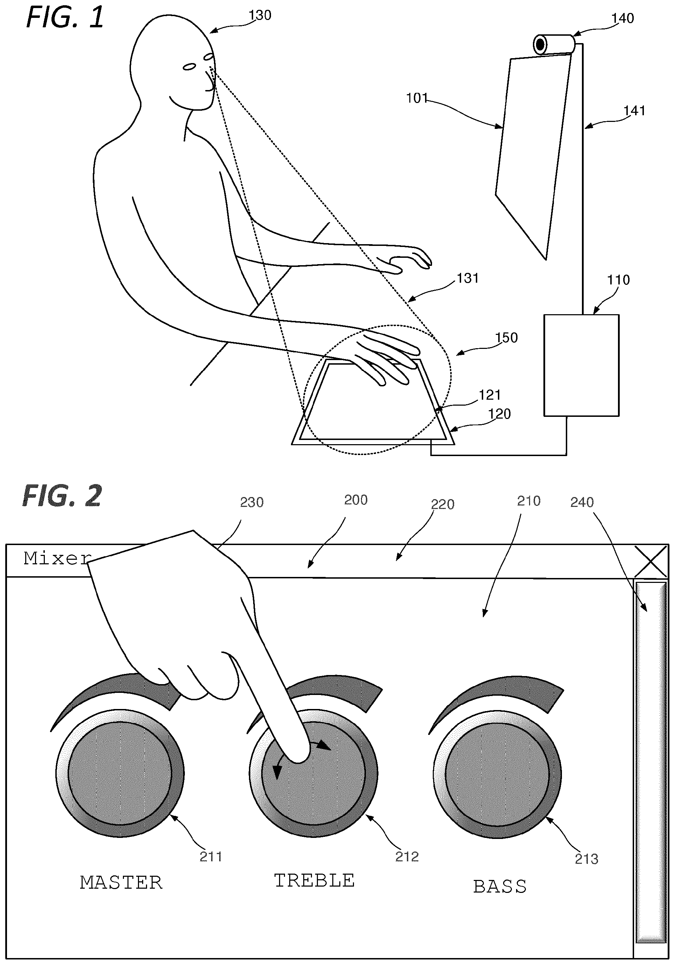

Figure 1 shows a system for modulation of control interface feedback in accordance with an embodiment.

As shown, a user 130 is seated in front of a display 101. On a work surface in front of the user there is situated a user input array 120, comprising a touchscreen 121. The touchscreen is in communication with a processor 110, which also received data from a gaze tracking system 140, which is arranged so as to track the gaze of the user 130.

In operation, the input interface processor 110 controls a user input array 120 to be operated by the user 130. The processor receives gaze direction data 141 for the user, and when the gaze direction data indicates a coincidence of the gaze 131 of the user 130 with a specified region in space 150, the processor controls the user input array 120 to enable input in a first mode, and when the gaze direction data 141 does not indicate a coincidence of the gaze of the user with the specified region in space 150, controlling the user input array 120 to enable input in a second mode.

The specified region may be defined as a two dimensional surface, a three dimensional volume, and angle of orientation of the users view or a combination of these, as may be appropriate in order to determine whether the user's gaze in such a way as to receive primary feedback as to interactions with the input array, or not.

The primary feedback may be visual, for example, in embodiments such as that of figure 1 where the feedback interface is a touch screen, the screen may provide feedback about the users interactions with the screen, for example in the form of animated representations of a moving virtual control, the position of cursor on a scale, and the like.

Various systems are used to track eye movements, which may be adapted to implement this functionality. Any such system may be used, including head-mounted, table-based, or remote systems. These devices commonly use video-cameras and processing software to compute the gaze position from the pupil/corneal reflection of an infra-red emissive source. To increase data accuracy with table devices, it is possible to limit head movement with a fixed chin on the table. A calibration process is also common, to ensure system accuracy. The calibration process usually consists of displaying several points in different locations of the viewing scene; the Eye Tracking software will compute a transformation that processes pupil position and head location. Table-based eye trackers are usually binocular and can thus calculate eye divergence and output raw coordinates of the Gaze Intersection Point (GIP) in x-y pixels applied to a screen in real-time. This feature allows integration of gaze position as an input for the HMI. Areas Of Interest (AOIs) are then defined to interact with the user. When the gaze meets an AOI an event is generated and a specific piece of information will be sent. When an AOI is an element of the interface with some degree of freedom (a scrollbar, for instance), one is talking about a dynamic AOI (dAOI). Tracking of a dAOI is more challenging compared to a static one.

In some embodiments the gaze direction may simply be taken to be the instantaneous point of regard, that is, whatever point the eye tracking system considers the user to be looking at the instant the input is received. In other embodiments, the point of attention may take into account other factors such as system status, historical information and the like. In certain embodiments, the determination of the point of attention of the user may involve determining a weighted average of the users point of regard over a predetermined duration-further embodiments are described hereafter.

Various parameters will impact the precision of raw data issued from the Eye Tracking system. Among them, the video frame rate and the camera resolution are critical for the Eye Tracking software. Existing systems use a video frame rate from 30 to 2000 Hz, and it is expected that higher frame rates will be used in future systems. For high precision Eye Tracking, high frequency rate will improve data filtering but will also in-crease the data size and processing time which is critical for online processing.

Eye tracking data collected during an experiment can be analyzed by statistical methods and visualization techniques to reveal characteristics of eye movements (fixations, hot spots, saccades, and scanpaths). Fixation, saccade, and smooth pursuit events can be computed from raw data coordinates. To correlate these pieces of information with the Human-Machine Interface (HMI), some interface-related data have to be collected (i.e. object coordinates within the interface, HMI events like mouse hover, etc.). This information can be used to infer user behaviour:
- fixation (smooth pursuit) indicates visual encoding during overt orienting;
- saccade is the process of visual research when the focus of attention is shifted;
- number of fixations on a specific object is often an indicator of the importance attached to a specific object;
- mean fixation duration or total dwell time (that is, the period the user's gaze is determined to be fixed on a particular point or region) can be correlated to the visual demand induces by the design of an object or the associated task engagement.

Saccades are rapid eye movements that serve to change the point of fixation, and during which, as it is often considered, no information is encoded. Fixations occurs when the user fixate an object (usually during a 150 ms threshold) and encode relevant information. Sometimes shorter fixations are taken into account. Unlike long fixations that are considered to be a part of top-down visual processing, short ones are regarded as part of a bottom-up process. It is estimated that 90% of viewing time is dedicated to fixations. Other complex ocular events like glissades or retro-saccades could be considered. There exist numerous algorithms of eye movement event detection. Still, there is no general standard for these algorithms. The blink duration and frequency can be used to assess cognitive workload, both of which can be collected with an eye-tracker. Variation of the pupil diameter can also be used as an indication of the cognitive workload, defined as task-evoked pupillary response (TEPR). However, light sources (environment, electronic displays, etc.) must be strictly controlled since the pupil light reflex is more pronounced than the impact of the cognition on pupil size. Moreover, even the luminance of the fixation area (even when the luminance of the computer screen does not change) has an impact on the pupil size. Scanpaths can also provide insight on HMI usage. In general, collected and cleaned data can be analyzed to infer causal links, statistics, and user behaviour. By considering these various factors, the system attempts to continuously maintain an indication of the point in the display which represents the user's current focus.

The user input array 120 is associated with a primary feedback interface 121 generating the primary feedback as to the input array. When input is enabled in the first mode, user feedback is provided under control of the processor 110 via the primary feedback interface 121.

The specified region 150 may be defined as corresponding to a region presenting primary feedback as to the input received via the input array 120. Since in the present example the input array is a touch screen, the screen itself may serve both as an input device, and also as a means to presenting the location of interface features, and the effects of the users interactions to the user. As such the primary feedback interface may comprise at least a portion of the input array.

In other embodiments, the primary feedback interface may be physically separate from the input array. Still further, the specified region need not correspond to the location of the primary feedback interface- while as shown in figure 1 the primary feedback interface is a touch screen, the primary feedback interface might comprise any means capable of producing visual information, which might then be transmitted via indirect means into the user's field of vision. For example the primary feedback interface might comprise a projector, in which case the specified region would correspond to the surface onto which the feedback is projected, rather than the projector itself.

Similarly, embodiments may be based on virtual reality or augmented reality equipment such as goggles or glasses. In such cases, while the specified region may be defined as any desired region in space as discussed above, the primary feedback may be provided by the goggles.

On this basis, as shown the specified region 150 corresponds to the location of the input array 120. It will be appreciated that the specified region may be larger than the input array, for example encompassing a number of arrays. It will be appreciated that the specified region may be smaller than the input array, for example corresponding to a particular region of the arrays. It will be appreciated that the specified region may change position, size or shape over time, as the context evolves. For example, the region may shift from one display to another.

Since specified region 150 may be defined as corresponding to a region presenting visual feedback as to the input, in the first mode the user may be presumed to benefit from direct visual feedback as to the location of particular interface features, and the effect of his gestures. In the second mode meanwhile, the user may be presumed not to benefit from direct visual feedback as to the location of particular interface features, and the effect of his gestures, and as such in the second mode the system may be configured to adjust its behaviour to compensate for this reduced feedback channel.

It will be appreciated that in some cases an instantaneous switch between modes may not be optimal. For example, if the user's gaze merely briefly passes through, or briefly leaves the specified region, it may not be desirable to change mode. In certain embodiments a delay may be imposed in changing from the first mode to the second mode, and/or from the second mode to the first mode. The delay may be different in changing from the first mode to the second mode, and/or from the second mode to the first mode. The delays may be set individually for a given user.

The delays may be fine tuned during operation to provide optimal results. The duration of the delays may also be fixed or modified as a function of outside conditions, for example the degree of vibration or acceleration a platform containing an implementation of the invention is instantaneously exposed to.

The duration of the delays may also be fixed or modified as a function of the interaction underway, expected or requested by the system. Interactions classified as requiring a high degree of precision and contact feedback may automatically reduce delays, whilst less demanding situations may presume a longer delay.

The duration of the delays may also be fixed or modified as a function of the user's established visual circuits. In many scenarios a user will cycle their visual attention through a number of points including the specified region. In a case where a user's is attention is expected on the basis of this established cycle the delay may be reduced or foregone. In a case where a user's is attention is known to pass over the specified region at certain stages of the established cycle without stopping the delay may be increased, on the basis of a presumption that the users gaze direction is merely passing through the specified region on the path to the next point in the circuit. In a case where a user's is attention leaves the established cycle entirely, the delay may be reduced, on the basis of a presumption that an unusual situation has arisen and a high degree of reactivity is required.

In some cases, the processor may delay switching between modes in cases where user input is already underway in one mode or the other at the time when the users view enters or leaves the specified region, so that input may continue in the current mode without interruption.

In certain embodiments, interactions subject to contact feedback may additionally be rendered through additional visual or other feedback, which may be presented on the primary feedback interface or elsewhere. In particular, a representation of touches detected by a touchscreen may be presented.

In certain embodiments, switching between the first and second modes may additionally be triggered by further user actions, for example the manual operation of a switch or sensor, which may be incorporated in said interface array.

Although as described with regard to figure 1 the primary feedback may be visual, in other embodiments primary feedback may be provided by other means. For example, the feedback interface may comprise an audio feedback and the primary feedback is an audio feedback. On this basis while in the second mode the user may receive tactile feedback from the contact feedback interface, in the first mode the user may receive audio feedback such as beeps, clicks, rising or falling tones and the like, or the activation of universal access/audio description features as generated by the primary feedback interface so as to represent the status of the input array and the input provided by the user thereto.

Other alternative feedback mechanisms for primary feedback may be envisaged, such as, haptic feedback (such as vibrations or pulses in the user's chair, work surface, the interface array itself or elsewhere), additional visual feedback (such as a pop up in the primary display 101, or otherwise), and so on.

Figure 2 presents an example of an interface array in accordance with an embodiment.

Figure 2 shows a typical graphical interface, as may be implemented using a touchscreen. As shown, a mixer application window 200 comprises an input pane 210, title bar 220, and slider bar 240 as examples of typical GUI interface features. The input pane 210 displays three virtual knobs 211, 212, 213, which as shown correspond to the master volume, treble and bass controls of the mixer respectively. As shown, a user's finger 230 touches the surface of the touchscreen over the virtual treble knob 212, and by tracing a substantially radial path on the surface of the screen over the virtual treble knob 212 simulates the act of adjusting the knob. The underlying software running on the screen or elsewhere can then interpret this gesture and make corresponding adjustments to the sound in accordance with the expected working of an audio mixer.

As described with respect to figure 1, in the second mode the system may be configured to adjust its behaviour to compensate for this reduced feedback channel. Such adjustments may include the generation of additional feedback for example audio feedback (such as beeps, clicks, rising or falling tones and the like, or the activation of universal access/audio description features), haptic feedback (such as vibrations or pulses in the user's chair, work surface, the interface array itself or elsewhere), additional visual feedback (such as a pop up in the primary display 101, or otherwise), and so on. Furthermore, the behaviour of the interface array itself may be adapted to correspond to this lack of direct feedback- the size of interface features may be increases, the area between features may be increased, and so on. Aesthetic features, labels and other features of reduced value in the second mode may be removed. In some embodiments the display may simply be switched off as a power saving measure. Still further, the received input may receive additional processing in the light of the lack of direct feedback. For example, data may receive additional smoothing or other processing to remove transient anomalies. Extreme, sudden or unexpected input values may be identified, and additional confirmation from the user requested.

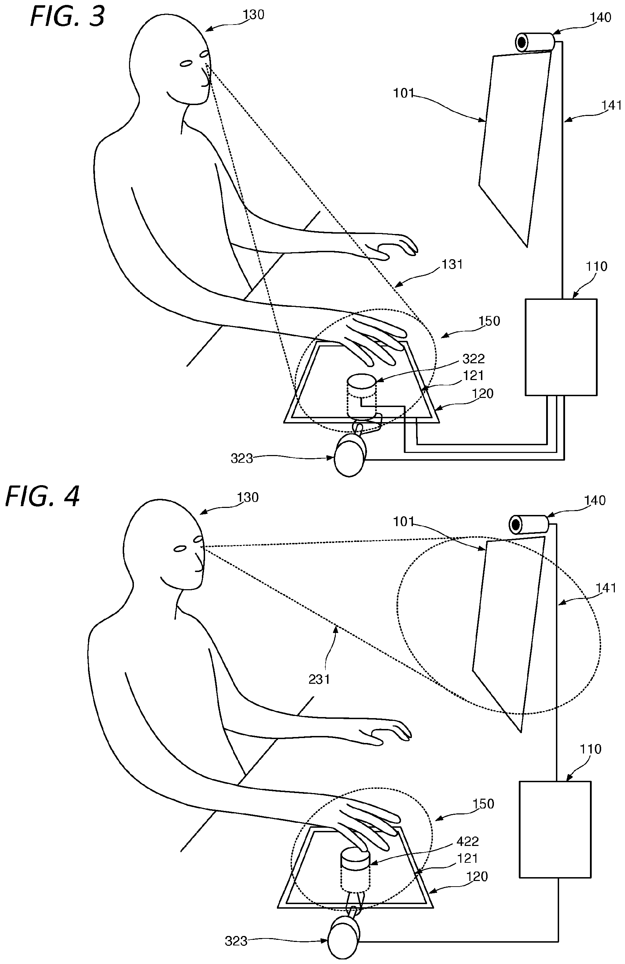

Figure 3 shows a further embodiment in a first state.

As discussed above, In the second mode meanwhile, the user may be presumed not to benefit from direct visual feedback as to the location of particular interface features, and the effect of his gestures, and as such in the second mode the system may be configured to adjust its behaviour to compensate for this reduced feedback channel. In accordance with the embodiment of figure 3, the system adapts in the second mode to provide an additional feedback channel. Specifically, in accordance with this mode there is provided an additional contact feedback interface.

Figure 3 shows a user 130 is seated in front of a display 101. On a work surface in front of the user there is situated a user input array 120, comprising a touchscreen 121. The touchscreen is in communication with a processor 110, which also receives data from a gaze tracking system 140, which is arranged so as to track the gaze of the user 130. As such, to this extent figure 3 corresponds to figure 1. Meanwhile, as shown in figure 3 there is further provided a contact feedback interface 122.

The contact feedback interface is associated with the user input array 120. In particular as shown the contact feedback interface is a component of the input array 120, although in other embodiments other associations may be adopted.

As shown in figure 3, the contact feedback interface 122 is a physical knob which protrudes from the surface of the user input array 120. In operation, when input is enabled in the second mode, user feedback is provided under control of the processor the via the contact feedback interface 122. In the present embodiment, this may comprise the knob rotating proportionally to the user's input- that is to say, the user may rotate the knob, and intuitively understand that his input will correspond to the manner in which he does so.

In operation, when input is enabled in the second mode, user feedback is provided under control of the processor the via the contact feedback interface 122.

Although as shown the contact feedback interface 122 comprises a knob, it may comprise any convenient physical input device as may correspond to the context. For example, a button, knob, slider, joystick or switch.

Still further, the contact feedback interface 122 need not comprise a discrete physical input device, but may comprise a haptic transducer, which may for example produce simulated textures and surface features that are detectable to the user's fingers.

As shown, the contact feedback interface is integrated with the input array. Indeed, the knob as shown may correspond to the knob 212 as shown in the first mode of operation in figure 2.

In accordance with certain embodiments and as shown in figure 3 the physical input device may be mounted retractably with respect to the input array 120 under the effect of a motor 123. In this case, the motor 123 is operated under the control of the processor 110 so as to retract the physical input device in the second mode, and to extend the physical input device in the first mode. It will be appreciated that the term "motor" here should be understood in include any device capable of controllably moving the physical input device, and as such may include pneumatic, hydraulic, electrical, or any other type of motor or actuator. The physical input device may be resiliently biased towards either an extended or retracted position, so that operation of an external force is only required to adopt the opposing position, in which case any such resilient biasing such as a spring or the like may be consider to constitute an element of the motor.

As shown in figure 3, the users gaze 131 coincides with the specified region 150, which as shown corresponds to the location of the input array 120, primary feedback interface 121 and contact feedback interface 322. Accordingly feedback is provided in the first mode, via the primary feedback interface, and the contact feedback interface 322 is shown retracted.

Figure 4 shows the embodiment of figure 3 in a second state.

As shown in figure 4, the user's gaze 131 does not coincide with the specified region 150, but rather with the further display 101. Accordingly feedback is provided in the second mode, via the contact feedback interface, 422 which is shown extended. As shown the 422 is extended by the operation of a cam rotated by an electric motor 323, however the skilled person will appreciate that countless alternative mechanisms may be envisaged without departing from the scope of the present invention.

It may be noted that in figures 3 and 4 the contact feedback interface 322, 422 is integrated in the center of the input array. In embodiments where the input array comprises a touchscreen, this may be achieved by implementing a composite input array comprising a number of display elements disposed around the contact feedback interface. An upper surface of the contact feedback interface itself may be provided with display elements and/or touch sensitive elements so that in its retracted position it can operate as an integral part of a primary feedback interface belonging to the input array.

Although the preceding embodiments of the invention disclose the provision of a single contact feedback interface, it will be appreciated that any number of such elements may be provided. Furthermore, any combination of different types of contact feedback interface as discussed above or otherwise may be used in combination.

Still further, a plurality of specified regions may be defined, each of which may be associated with a different input interface, and/or a different respective primary feedback type, and/or a different respected contact feedback type.

For example, different specified regions may be associated with respective video sources such as cameras, whereby when the user's gaze is directed towards the specified region associated with a particular source, a representation of the video source is presented in a corresponding display or display region in the first mode. A common input interface may be provided for the respective displays and/or sources.

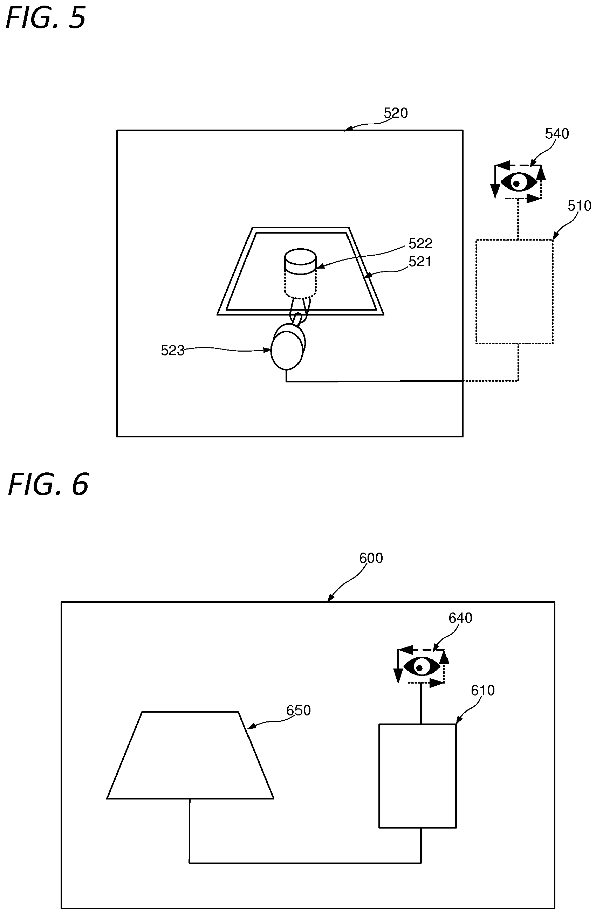

Figure 5 shows an input interface array in accordance with an embodiment.

As shown there is provided an input interface array 520 comprising a contact input interface 522 as described above, and a primary interface 521 as described above. The input interface array is adapted to communicate with a processor 510 as described above.

Figure 6 shows an input interface system in accordance with an embodiment.

As shown there is provided an input interface system 600 comprising a gaze tracker 640 providing user gaze direction data, a processor 610 as described above, and an input interface array as described above.

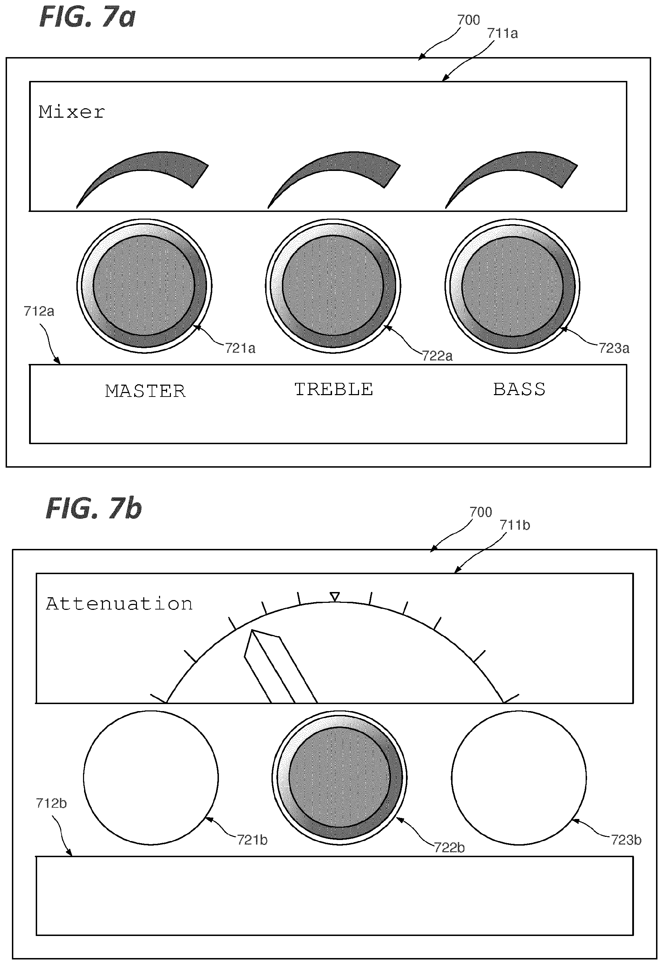

Figure 7a shows a hybrid input array in accordance with an embodiment.

As shown in figure 7a, there is provided an input array 700 comprising two rectangular display areas 711a and 712a, and three retractable contact feedback interface elements 721a, 722a and 723a. As shown, these elements reproduce substantially the mixer interface of figure 2, with the upper display area 711a showing the text label "Mixer" and the graphical indications indicating that turning any virtual knob clockwise will result in an increase in volume, and the lower display area presenting the respective labels "Master", "Treble" and "Bass". The contact feedback interface elements 721a, 722a and 723a are shown as comprising display and touch sensitive elements so that in the first mode as shown the contact feedback interface elements 721a, 722a and 723a are fully integrated in the touch based interface in the first mode of operation.

It will be understood that in accordance with the foregoing description, when the user's gaze moves away from the input array 700 the processor will switch to the second mode of operation in which the retractable contact feedback interface elements will assume their extended positions, and in which some or all of the graphic elements of the respective displays may be removed or modified, on the basis that in this second mode the user interacts with the input array 700 solely by tactile means.

Figure 7b shows a hybrid input array in accordance with a further embodiment.

As shown in figure 7b, there is provided an input array 700 comprising two rectangular display areas 711b and 712b, and three retractable contact feedback interface elements 721, 722 and 723b as described above with reference to figure 7a. As shown in figure 7b however, these elements present an entirely different interface, with only one knob supporting a fine value selection on a dial displayed in the first display area 711b. The second display area 712b and the displays of the first and third contact feedback interface elements 721b and 723b are blank, whilst the second contact feedback interface element 722b illustrates a virtual knob as in figure 7a.

It will be understood that in accordance with the foregoing description, when the user's gaze moves away from the input array 700 the processor will switch to the second mode of operation in which the retractable contact feedback interface element 722b, but not 721b or 723b will assume its extended position, and in which some or all of the graphic elements of the respective displays may be removed or modified, on the basis that in this second mode the user interacts with the input array 700 solely by tactile means.

As such, figures 7a and 7b demonstrate the benefits in terms of flexibility of a hybrid input array in accordance with embodiments of the invention.

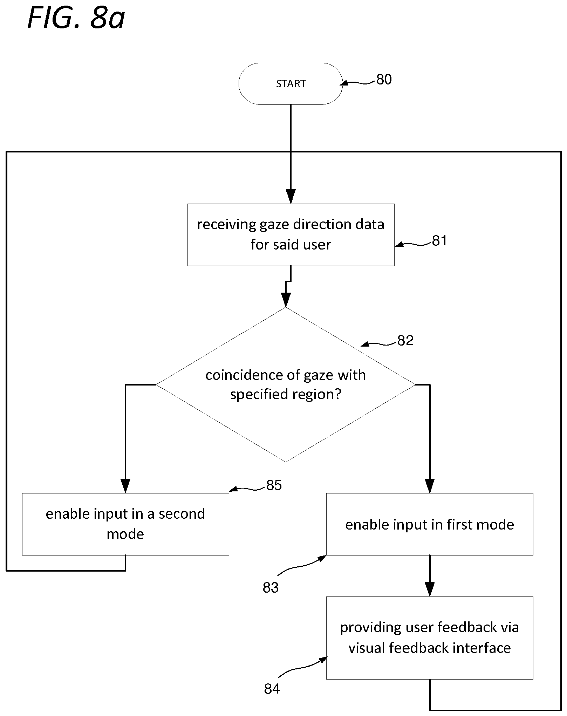

Figure 8a shows a method of controlling a user input array in accordance with an embodiment.

Figure 8a shows a method of controlling a user input array to be operated by a user. As shown, the method starts at step 80 before proceeding to step 81 at which gaze direction data are received for the user. The method next determines at step 82 whether the gaze direction data indicates a coincidence of the gaze of the user with a specified region in space. In a case where the gaze direction data indicates a coincidence of the gaze of the user with a specified region in space the method proceeds to step 83 in which the user input array is controlled to enable input in a first mode, and at step 84 provides user feedback via the primary feedback interface before looping back to step 81. In a case where at step 82 the gaze direction data indicates a non-coincidence of the gaze of the user with the specified region in space, the method proceeds to step 85 the user input array is controlled to enable input in a second mode before looping back to step 81.

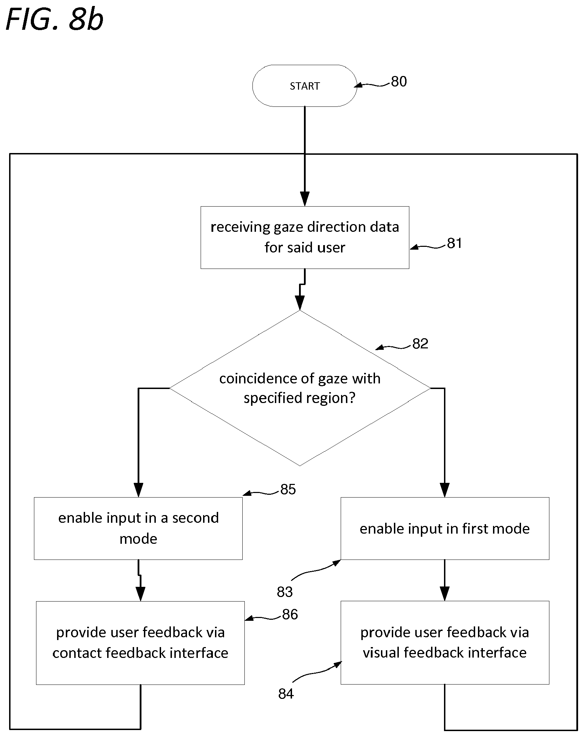

Figure 8b shows a development of the method of controlling a user input array of figure 8a.

The method of figure 8b comprises the same steps as that of figure 8a, however as shown after step 85 the method proceeds to step 86 at which user feedback is provided under control of the processor via the contact feedback interface.

It will be appreciated that while steps 83 and 84, and respectively 85 and 86 are shown as taking place consecutively, they may equally by performed in parallel.

According to certain embodiments a user interface behaves differently depending on whether a user is looking at it or not. The user interface may rely on visual feedback to the user when they are looking at it, and a tactile feedback when the user's gaze is elsewhere. This tactile feedback may be provided by haptic means, or by extensible/retractable hardware interface features such as knobs, buttons, switches or sliders.

The disclosed methods can take form of an entirely hardware embodiment (e.g. FPGA), an entirely software embodiment (for example to control a system according to the invention) or an embodiment containing both hardware and software elements. Software embodiments include but are not limited to firmware, resident software, microcode, etc. The invention can take the form of a computer program product accessible from a computer-usable or computer-readable medium providing program code for use by or in connection with a computer or an instruction execution system.

A computer-usable or computer-readable can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium.

ln some embodiments, the methods and processes described herein may be implemented in whole or part by a user device. These methods and processes may be implemented by computer-application programs or services, an application-programming interface (API), a library, and/or other computer-program product, or any combination of such entities.

The user device may be a mobile device such as a smart phone or tablet, a computer or any other device with processing capability, such as a robot or other connected device.

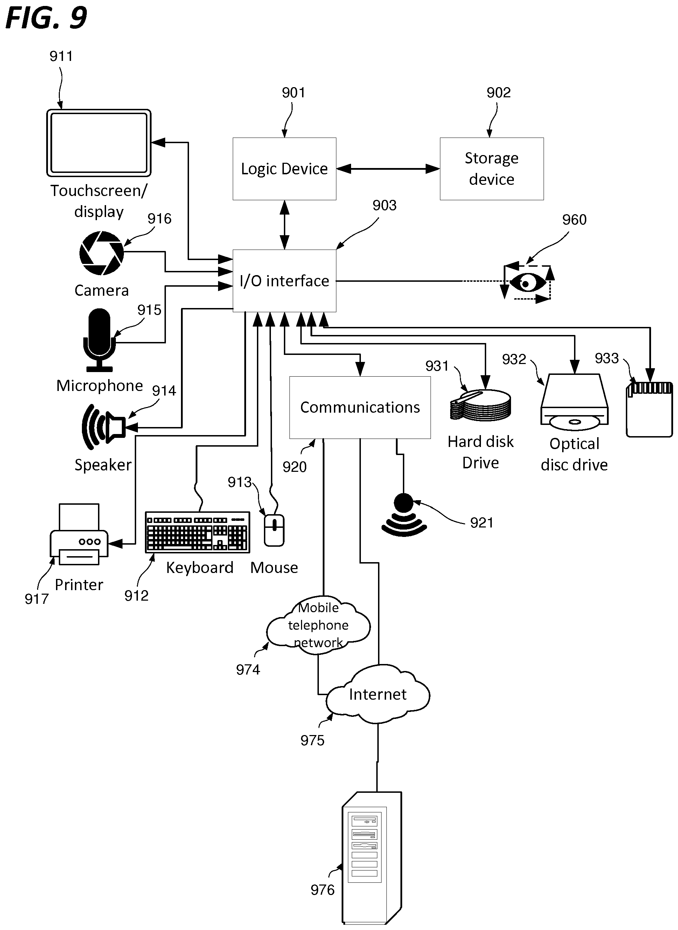

Figure 9 shows a generic computing system suitable for implementation of embodiments of the invention.

A shown in figure 9, a system includes a logic device 901 and a storage device 902. The system may optionally include a display subsystem 911, input subsystem 912, 913, 914, communication subsystem 920, and/or other components not shown.

Logic device 901 includes one or more physical devices configured to execute instructions. For example, the logic device 901 may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic device 901 may include one or more processors configured to execute software instructions. Additionally or alternatively, the logic device may include one or more hardware or firmware logic devices configured to execute hardware or firmware instructions. Processors of the logic device may be single-core or multi-core, and the instructions executed thereon may be configured for sequential, parallel, and/or distributed processing. Individual components of the logic device 901 optionally may be distributed among two or more separate devices, which may be remotely located and/or configured for coordinated processing. Aspects of the logic device 901 may be virtualized and executed by remotely accessible, networked computing devices configured in a cloud-computing configuration.

Storage device 902 includes one or more physical devices configured to hold instructions executable by the logic device to implement the methods and processes described herein. When such methods and processes are implemented, the state of storage 902 device may be transformed-e.g., to hold different data.

Storage device 902 may include removable and/or built-in devices. Storage device 902 may comprise one or more types of storage device including optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage device may include volatile, non-volatile, dynamic, static, read/write, read-only, random-access, sequential-access, location-addressable, file-addressable, and/or content-addressable devices.

In certain arrangements, the system may comprise an interface 903 adapted to support communications between the Logic device 901 and further system components. For example, additional system components may comprise removable and/or built-in extended storage devices. Extended storage devices may comprise one or more types of storage device including optical memory 932 (e.g., CD, DVD, HD-DVD, Blu-Ray Disc, etc.), semiconductor memory 933 (e.g., RAM, EPROM, EEPROM, FLASH etc.), and/or magnetic memory 931 (e.g., hard-disk drive, floppy-disk drive, tape drive, MRAM, etc.), among others. Such extended storage device may include volatile, non-volatile, dynamic, static, read/write, read-only, random-access, sequential-access, location-addressable, file-addressable, and/or content-addressable devices.

It will be appreciated that storage device includes one or more physical devices, and excludes propagating signals per se. However, aspects of the instructions described herein alternatively may be propagated by a communication medium (e.g., an electromagnetic signal, an optical signal, etc.), as opposed to being stored on a storage device.

Aspects of logic device 901 and storage device 902 may be integrated together into one or more hardware-logic components. Such hardware-logic components may include field-programmable gate arrays (FPGAs), program- and application-specific integrated circuits (PASIC/ASICs), program- and application-specific standard products (PSSP/ASSPs), system-on-a-chip (SOC), and complex programmable logic devices (CPLDs), for example.

The term "program" may be used to describe an aspect of computing system implemented to perform a particular function. In some cases, a program may be instantiated via logic device executing machine-readable instructions held by storage device. It will be understood that different modules may be instantiated from the same application, service, code block, object, library, routine, API, function, etc. Likewise, the same program may be instantiated by different applications, services, code blocks, objects, routines, APIs, functions, etc. The term "program" may encompass individual or groups of executable files, data files, libraries, drivers, scripts, database records, etc.

The system comprises eye tracking hardware which may correspond to elements 140, 540, 640 as described above. This hardware may be an integral component of the system or a peripheral. Its functionality may be supported or enhanced by software running on the logic device 901 or otherwise.

In particular, the system of figure 9 may be used to implement embodiments of the invention.

For example a program implementing the steps described with respect to figure 8a or 8b may be stored in storage device 902 and executed by logic device 901. Data defining the specified region and/or the users gaze direction may be stored in storage 902 or the extended storage devices 932, 933 or 931. The Logic device 901 may use data received from the camera 916 or eye tracking system 960 to determine the users gaze direction, and the display 911 may provide the functionality of the user input array and/or visual feedback interface. The contact feedback interface may constitute an additional peripheral.

Accordingly the invention may be embodied in the form of a computer program.

It will be appreciated that a "service", as used herein, is an application program executable across multiple user sessions. A service may be available to one or more system components, programs, and/or other services. In some implementations, a service may run on one or more server-computing devices.

When included, display subsystem 911 may be used to present a visual representation of data held by storage device. This visual representation may take the form of a graphical user interface (GUI). As the herein described methods and processes change the data held by the storage device 902, and thus transform the state of the storage device 902, the state of display subsystem 911 may likewise be transformed to visually represent changes in the underlying data. Display subsystem 911 may include one or more display devices utilizing virtually any type of technology. Such display devices may be combined with logic device and/or storage device in a shared enclosure, or such display devices may be peripheral display devices.

When included, input subsystem may comprise or interface with one or more user-input devices such as a keyboard 912, mouse 911, touch screen 911, or game controller, button, footswitch, etc. (not shown). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, colour, stereoscopic, and/or depth camera for machine vision and/or gesture recognition; a head tracker, eye tracker 960, accelerometer, and/or gyroscope for motion detection and/or intent recognition; as well as electric-field sensing componentry for assessing brain activity.

When included, communication subsystem 920 may be configured to communicatively couple computing system with one or more other computing devices. For example, communication module of may communicatively couple computing device to remote service hosted for example on a remote server 976 via a network of any size including for example a personal area network, local area network, wide area network, or the internet. Communication subsystem may include wired and/or wireless communication devices compatible with one or more different communication protocols. As non-limiting examples, the communication subsystem may be configured for communication via a wireless telephone network 974, or a wired or wireless local- or wide-area network. In some embodiments, the communication subsystem may allow computing system to send and/or receive messages to and/or from other devices via a network such as the Internet 975. The communications subsystem may additionally support short range inductive communications 921 with passive devices (NFC, RFID etc).

The system of figure 9 is intended to reflect a broad range of different types of information handling system. It will be appreciated that many of the subsystems and features described with respect to figure 9 are not required for implementation of the invention, but are included to reflect possible systems in accordance with the present invention. It will be appreciated that system architectures vary widely, and the relationship between the different subsystems of figure 4 is merely schematic, and is likely to vary in terms of layout and the distribution of roles in systems. It will be appreciated that, in practice, systems are likely to incorporate different subsets of the various features and subsystems described with respect to figure 9.

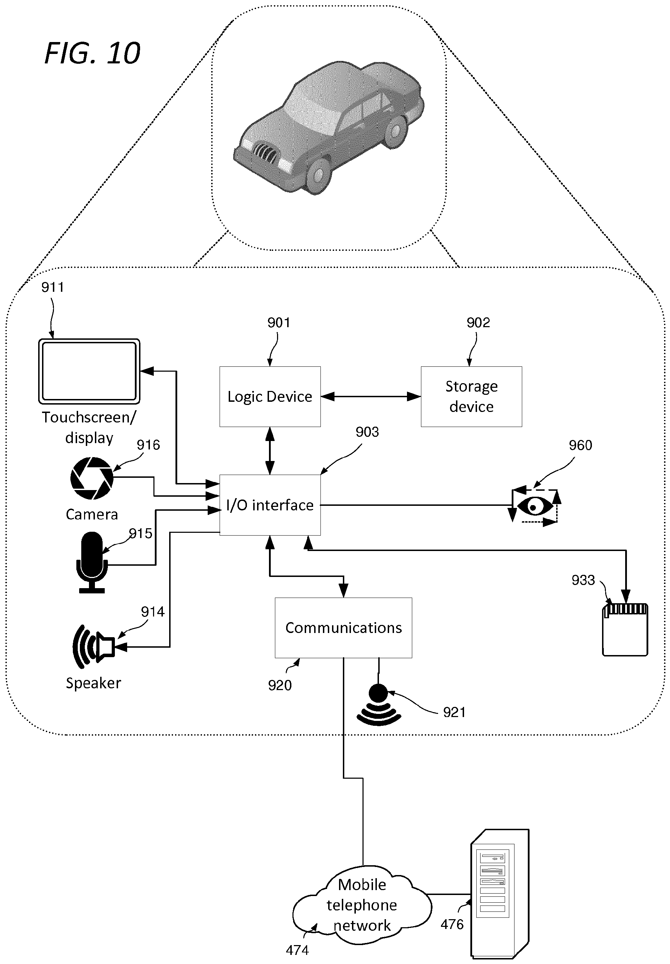

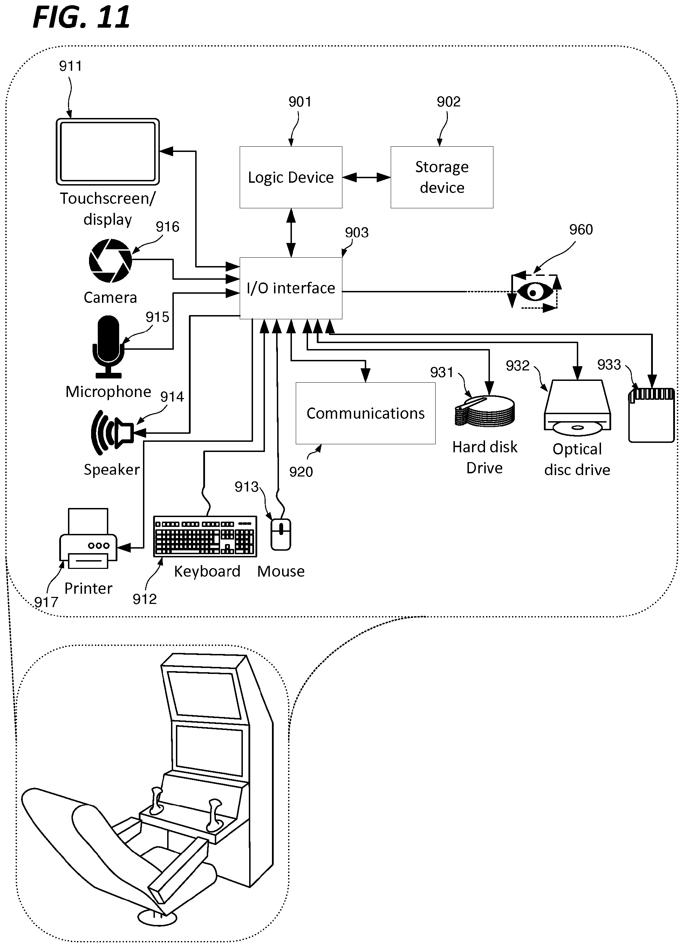

Figures 10 and 11 disclose further example devices in accordance with the present invention. Those of ordinary skill in the art will appreciate that systems may be employed in the future which also operate in accordance with the present invention.

Figure 10 shows a vehicle adaptable to constitute an embodiment. As shown in figure 10, the vehicle comprises elements 901, 902, 903, 911, 920,921, 933, 914, 915, 916, 960 and 921 as described above. It may be in communication with a server 976 via the mobile telephone network 974. On the other hand, elements 931, 932, 916, 917, 912, 913 and 975 may be omitted.

As discussed above, a plurality of specified regions may be defined, each of which may be associated with a different input interface, and/or a different respective primary feedback type, and/or a different respected contact feedback type. The embodiment of figure 10 provides a convenient context for development of certain such embodiments. For example, a vehicle may be provided with input interfaces corresponding to different respective vehicle systems, such as the vehicle entertainment system on one hand and the air conditioning system on the other. On this basis, a specified region corresponding to the vehicle entertainment system may be defined, as well as a further specified region corresponding to the air conditioning system. These regions may correspond to the location of the input interfaces for these systems, or not. On this basis, when the user's gaze is directed towards the specified region corresponding to the vehicle entertainment system, he may receive primary feedback visually as discussed above for example from a display associated with the corresponding input interface, or by audio feedback or other means as described above. By the same token when the user's gaze is directed towards the specified region corresponding to the air conditioning system, he may receive primary feedback visually as discussed above for example from a display associated with the corresponding input interface, or by audio feedback or other means as described above. Meanwhile, when the user's gaze is not directed towards a respective specified region, he may still obtain feedback with respect to the vehicles systems for example via respective contact feedback interfaces associated with those systems. Still further, in certain embodiments the respective vehicle systems may be associated with the same input interface. In such embodiments, when the user's gaze is in a space associated with one system the type of contact feedback interface presented in the second mode (e.g. button, knob, slider, joystick or switch or otherwise) may be specified as a function of the system to be controlled- for example, a knob might be presented for the control of the entertainment system sound volume, and a slider for setting the air conditioning temperature.

Figure 11 shows a flight controls adaptable to constitute an embodiment. As shown in figure 11, the flight controls incorporate elements 901, 902, 903, 911, 920, 931, 932, 933 and 960 as described above. It is in communication with elements 912, 913, 914, 915, 916, 917 as peripheral devices which may also be incorporated in the same computer device. On the other hand, elements 921 and 974, server 976 and network 975 may be omitted.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. An input interface processor (110) controlling a user input array (120) to be operated by a user (130), said processor receiving gaze direction data (141) for said user, said processor adapted to determine when said gaze direction data indicates a coincidence of the gaze (131) of said user (130) with a specified region in space (150) associated with a primary feedback as to said input array, said processor being further adapted when said gaze direction data indicates a coincidence of the gaze (131) of said user (130) with said specified region in space to control said user input array (120) to enable interaction in a first mode, and when said gaze direction data (141) does not indicate a coincidence of the gaze of said user with said specified region in space (150), to control said user input array (120) to enable interaction in a second mode, and wherein said user input array (120) is associated with a feedback interface (121) generating said primary feedback as to said input array, and wherein when input is enabled in said first mode, said primary feedback is provided under control of said processor (110) via said feedback interface (121).

2. The input interface processor of claim 1 wherein said feedback interface comprises at least a portion of said input array.

3. The input interface processor of claim 2 wherein said feedback interface comprises a visual feedback interface and wherein said primary feedback is a visual feedback.

4. The input interface processor of claim 2 wherein said feedback interface comprises an audio feedback interface and wherein said primary feedback is an audio feedback.

5. The input interface processor of any preceding claim wherein said user input array (120) is associated with a contact feedback interface (122), and wherein when input is enabled in said second mode, secondary feedback is provided under control of said processor (110) via said contact feedback interface (122).

6. The input interface processor of claim 5 wherein said contact feedback interface (122) is a component of said input array (120).

7. The input interface processor of any of claim 5 or 6 wherein said contact feedback interface (122) comprises a haptic transducer.

8. The input interface processor of claim 5 or 6 wherein said contact feedback interface (122) comprises a button, knob, slider, joystick or switch.

9. The input interface processor of claim 8 wherein said button, knob, slider, joystick or switch is mounted retractably with respect to said input array (120) under the effect of a motor (123), and wherein said motor (123) is operated under the control of said processor (110) so as to retract said button, knob, slider or switch in said second mode, and to extend said button, knob, slider or switch in said first mode.

10. An input interface array comprising a contact input interface (122) according to any of claims 1 to 9 and a feedback interface (121) according to any of claims 1 to 7 adapted to communicate with a processor in accordance with any of claims 1 to 7.

11. An input interface system comprising a gaze tracker providing user gaze direction data, a processor (110) according to any preceding claim, and an input interface array in accordance with any of claims 1 to 9.

12. A method of controlling a user input array to be operated by a user, said method comprising the steps of receiving gaze direction data for said user, and when said gaze direction data indicates a coincidence of the gaze of said user with a specified region in space associated with a feedback interface, controlling said user input array to enable input in a first mode and providing primary feedback via said feedback interface, and when said gaze direction data does not indicate a coincidence of the gaze of said user with said specified region in space, controlling said user input array to enable input in a second mode.

13. The method of claim 12 wherein said user input array is associated with a contact feedback interface, and wherein when input is enabled in said second mode of said user input device, user feedback is provided under control of said processor via said contact feedback interface.

14. The method of claim 13 comprising the further step of controlling a motor so as to retract a button, knob, slider or switch in said second mode, and to extend said button, knob, slider or switch in said first mode.

15. A computer program comprising instructions implementing the steps of any of claims 12 to 14.
